# EUROPÄISCHE PATENTSCHRIFT

(11) **EP 2 843 195 B1**
(45) Veröffentlichungstag und Bekanntmachung des Hinweises auf die Patenterteilung: **14.06.2017**
(21) Anmeldenummer: 13182779.2
(22) Anmeldetag: 03.09.2013
(51) Int. Cl.: F01D 9/04, F01D 5/14, F02K 1/48, F02K 1/38

(54) **Gasturbinentriebwerk-Nachleitrad**
Gas turbine engine guide wheel
Rour de redresseur d'air arrière de turbine à gaz

(43) Veröffentlichungstag der Anmeldung: 04.03.2015
(73) Patentinhaber: MTU Aero Engines AG, 80995 München (DE)
(72) Erfinder: Hoeger, Martin, 85435 Erding (DE)

(56) Entgegenhaltungen:
- EP-A2- 1 191 214
- DE-A1-102004 004 076
- US-A- 4 117 671
- US-A- 5 943 856
- US-A1- 2009 092 480

## Beschreibung

Die vorliegende Erfindung betrifft ein Nachleitrad für ein Gasturbinen-Triebwerk sowie ein Gasturbinen-Triebwerk mit einem solchen Nachleitrad.

Beispielsweise aus der WO 99/14464 A1 ist ein Gasturbinen-Triebwerk mit einem Nachleitrad bekannt, das an ein in Durchströmungsrichtung letztes Turbinenlaufgitter anschließt. Ein Kern-Strömungskanal dieses Nachleitrades konvergiert in Durchströmungsrichtung, um die Strömung zum Triebwerksaustritt bzw. einem Mischraum hin zu beschleunigen, in dem sich die Kernströmung mit einer Bypassströmung durch einen Bypass-Strömungskanal vereinigt. EP 1191214A2 offenbart auch ein Gasturbinen-Triebwerk der Stand der Technik mit einem ähnliche Nachleitrad. Aufgabe der vorliegenden Erfindung ist es, ein verbessertes Gasturbinen-Triebwerk zur Verfügung zu stellen.

Zur Lösung dieser Aufgabe ist ein Nachleitrad nach dem Oberbegriff des Anspruchs 1 durch dessen kennzeichnende Merkmale weitergebildet. Anspruch 13 stellt ein Gasturbinen-Triebwerk mit einem solchen Nachleitrad unter Schutz, die Unteransprüche betreffen vorteilhafte Weiterbildungen.

Ein Nachleitrad für ein Gasturbinen-Triebwerk nach einem Aspekt der vorliegenden Erfindung weist einen Kern-Strömungskanal mit einem Kanaleintrittsströmungsquerschnitt und einem Kanalaustrittsströmungsquerschnitt auf. Der Kern-Strömungskanal ist dazu vorgesehen bzw. eingerichtet, Abgase, die aus einem in Durchströmungsrichtung letzten Turbinenlaufgitter, insbesondere einer Niederdruckturbine, austreten, zu führen. Entsprechend schließt in einer Ausführung der vorliegenden Erfindung das Nachleitrad bzw. dessen Kanaleintrittsströmungsquerschnitt, wenigstens im Wesentlichen, unmittelbar an ein in Durchströmungsrichtung letztes bzw. hinterstes Turbinenlaufgitter eines Gasturbinen-Triebwerks nach einem Aspekt der vorliegenden Erfindung an.

Unter einem Strömungsquerschnitt im Sinne der vorliegenden Erfindung wird insbesondere ein durchströmbarer bzw. durchströmter Querschnitt, insbesondere senkrecht zu einer Kanalachse und/oder einer Maschinenachse des Gasturbinen-Triebwerks, verstanden. Er kann insbesondere radial durch eine radial innere Innenwand und eine radial äußere Außenwand definiert bzw. begrenzt sein.

Zwischen Kanaleintrittsströmungsquerschnitt und Kanalaustrittsströmungsquerschnitt ist ein Nachleitgitter angeordnet. Das Nachleitgitter weist in einer Ausführung mehrere in Umfangsrichtung beabstandete Leitschaufeln auf, die in einer Weiterbildung ein Umlenkprofil zur Strömungsumlenkung in Umfangsrichtung aufweisen. Unter einem Nachleitgitter im Sinne der vorliegenden Erfindung wird entsprechend insbesondere eine Leitschaufelanordnung verstanden, die dazu vorgesehen bzw. eingerichtet ist, eine das Nachleitgitter durchströmende Strömung in Umfangsrichtung umzulenken. Entsprechend ist das Nachleitgitter in einer Ausführung dazu ausgebildet, einer es durchströmenden Strömung an einem Gitteraustritt des Nachleitgitters eine von einem Gittereintritt unterschiedliche Geschwindigkeitskomponente in Umfangsrichtung aufzuprägen.

Das Nachleitrad weist weiter einen Bypass-Strömungskanal auf, der den Kern-Strömungskanal umgibt und sich mit diesem an dessen Kanalaustrittsströmungsquerschnitt vereinigt. Durch den Bypass-Strömungskanal kann angesaugte Luft an einer Brennkammer des Gasturbinen-Triebwerks vorbeigeleitet und anschließend mit den entspannten Abgasen aus dieser vereinigt werden. Insbesondere kann das Gasturbinen-Triebwerk entsprechend ein Turbofan-Triebwerk sein. In einer Ausführung ist es ein Getriebe-Turbofan-Triebwerk ("GTF") mit wenigstens zwei Turbinenstufen, von denen eine mit einer Verdichterstufe zur Verdichtung von Luft im Kern-Strömungskanal und eine andere mit einem Fan zur Beschleunigung von Luft im Bypass-Strömungskanal vorgesehen bzw. eingerichtet ist.

Nach einem Aspekt der vorliegenden Erfindung variiert in einem oder mehreren Axialabschnitten, die als erste Axialabschnitte bezeichnet werden und zwischen Kanaleintrittsströmungsquerschnitt und Kanalaustrittsströmungsquerschnitt angeordnet sind, eine radiale Erstreckung des Kern-Strömungskanals in Umfangsrichtung. Unter einer radialen Erstreckung im Sinne der vorliegenden Erfindung wird insbesondere der radiale Abstand zwischen einer radial inneren Innenwand und einer radial äußeren Außenwand verstanden, welche den Kern-Strömungskanal bzw. ersten Axialabschnitt in radialer Richtung begrenzen bzw. definieren.

Hierzu kann in einer Ausführung eine radiale Höhe einer radial inneren Innenwand des ersten Axialabschnitts variieren. Zusätzlich oder alternativ kann eine radiale Höhe einer radial äußeren Außenwand variieren. Unter einer radialen Höhe im Sinne der vorliegenden Erfindung wird insbesondere der radiale Abstand der Wand zu einer Maschinenachse des Gasturbinen-Triebwerks bzw. Nachleitrades verstanden.

Die radiale Erstreckung kann in einer Ausführung in Umfangsrichtung periodisch variieren. Hierunter wird insbesondere verstanden, dass eine radiale Erstreckung, die sich als Differenz (R-r) der radialen Höhe R der Außenwand und der radialen Höhe r der Innenwand, über einen Umfangswinkel ϕ periodisch ist: [R(ϕ + Φ) - r(ϕ + Φ)] = [R(ϕ) - r(ϕ)], wobei 0° < Φ = < 180° die Periode bezeichnet. Diese kann in axialer Richtung konstant sein oder variieren.

In einer Ausführung ist in einem oder mehreren ersten Axialabschnitten die radiale Erstreckung des Kern-Strömungskanals an einer Umfangsposition einer oder mehrerer, insbesondere aller Leitschaufel des Nachleitgitters minimal. Unter einer Umfangsposition einer Leitschaufel wird insbesondere die Umfangsposition ihrer Skelettlinie, Druck- und/oder Saugseite, insbesondere auf radialer Höhe der Innen- bzw. Außenwand verstanden. Zusätzlich oder alternativ kann die radiale Erstreckung in Umfangsrichtung gesehen in der Mitte zwischen zwei benachbarten Schaufeln des Nachleitgitters maximal sein. Der Kern-Strömungskanal ist sozusagen im Bereich der Leitschaufeln radial eingezogen.

Durch die in Umfangsrichtung variierende radiale Erstreckung des Kern-Strömungskanals kann in einer Ausführung vorteilhaft eine Vermischung der Strömung durch den Kern-Strömungskanal mit der Strömung durch den Bypass-Strömungskanal verbessert werden. Insbesondere kann ein Mischer, wie er in der WO 99/14464 A1 gezeigt ist, besser beschickt und/oder verkleinert werden, insbesondere entfallen. Mit anderen Worten kann in einer Ausführung ein Mischer, wenigstens teilweise, in den Kern-Strömungskanal integriert werden.

Nach einem Aspekt der vorliegenden Erfindung divergiert in einem oder mehreren ersten Axialabschnitten der Strömungsquerschnitt in Durchströmungsrichtung gesehen. Hierunter wird im Sinne der vorliegenden Erfindung insbesondere verstanden, dass wenigstens ein stromabwärtigerer Strömungsquerschnitt des ersten Axialabschnitts größer ist als wenigstens ein stromaufwärtigerer Strömungsquerschnitt. In einer Weiterbildung divergiert in einem oder mehreren ersten Axialabschnitten der Strömungsquerschnitt streng monoton. Hierunter wird im Sinne der vorliegenden Erfindung insbesondere verstanden, dass jeder Strömungsquerschnitt des ersten Axialabschnitts größer ist als alle Strömungsquerschnitte des zweiten Axialabschnitts, die stromaufwärts bzw. näher zum Kanaleintrittsströmungsquerschnitt angeordnet sind. Insbesondere kann in einer Ausführung ein maximaler Strömungsquerschnitt zwischen Kanalein- und -austrittsströmungsquerschnitt wenigstens das _{[AS1]}1,02fache und insbesondere wenigstens das 1,04fache des Kanaleintrittsströmungsquerschnitts betragen. Zusätzlich oder alternativ kann der maximale Strömungsquerschnitt in einer Ausführung höchstens das 1,10fache, vorzugsweise höchstens das 1,08fache und insbesondere höchstens das 1,06fache betragen. In einer Weiterbildung beträgt der maximale Strömungsquerschnitt zwischen Kanaleintrittsströmungsquerschnitt und Kanalaustrittsströmungsquerschnitt, wenigstens im Wesentlichen, das 1,05fache bzw. 105% des Kanaleintrittsströmungsquerschnitts.

Durch einen oder mehrere divergierende erste Axialabschnitte kann in einer Ausführung insbesondere eine Anströmung des Nachleitgitters optimiert werden. Zusätzlich oder alternativ kann eine Vermischung mit einer Strömung aus dem Bypass-Strömungskanal verbessert werden. Dies kann insbesondere eine geringfügige Verschlechterung des Wirkungsgrades des Nachleitgitters überwiegen.

Der maximale Strömungsquerschnitt des Kern-Strömungskanals ist zwischen Gitteraustritt des Nachleitgitters und Kanalaustrittsströmungsquerschnitt angeordnet, insbesondere beabstandet zu Gitteraustritt und/oder Kanalaustrittsströmungsquerschnitt, vorzugsweise - wenigstens im Wesentlichen - mittig zwischen Gitteraustritt und Kanalaustrittsströmungsquerschnitt. Hierdurch kann die Strömung im Kern-Strömungskanal nach dem Nachleitgitter zunächst verzögert und anschließend zum Kanalaustrittsströmungsquerschnitt hin beschleunigt werden, um Vermischung und/oder Schub des Triebwerks zu erhöhen und/oder die Durchströmung und/oder Belastung des Nachleitgitters zu verbessern.

In einer Ausführung kann der Strömungsquerschnitt zwischen Gittereintritt und Gitteraustritt des Nachleitgitters in Durchströmungsrichtung, wenigstens im Wesentlichen, konstant sein oder sogar konvergieren. Hierdurch kann in einer Ausführung die Durchströmung und/oder Belastung des Nachleitgitters verbessert werden. Zusätzlich oder alternativ kann der Strömungsquerschnitt zwischen dem maximalen Strömungsquerschnitt, der zwischen Gitteraustritt des Nachleitgitters und Kanalaustrittsströmungsquerschnitt angeordnet ist, und dem Kanalaustrittsströmungsquerschnitt in Durchströmungsrichtung, wenigstens im Wesentlichen, konstant sein oder sogar konvergieren. Hierdurch kann in einer Ausführung die Beschickung eines anschließenden Mischraums und/oder der Schub des Triebwerks verbessert werden.

Entsprechend können in einer Ausführung ein oder mehrere Axialabschnitte, die als zweite Axialabschnitte bezeichnet werden und zwischen Kanaleintrittsströmungsquerschnitt und Kanalaustrittsströmungsquerschnitt angeordnet sind, mit in Durchströmungsrichtung wenigstens im Wesentlichen konstantem oder konvergierendem Strömungsquerschnitt vorgesehen sein, wobei ein zweiter Axialabschnitt sich, wenigstens im Wesentlichen, vom Gittereintritt bis zum Gitteraustritt des Nachleitgitters erstrecken kann. Zusätzlich oder alternativ kann sich ein zweiter Axialabschnitt von dem maximalen Strömungsquerschnitt bis zu dem Kanalaustrittsströmungsquerschnitt erstrecken.

Ein zweiter Axialabschnitt kann sich stromaufwärts an einen ersten Axialabschnitt anschließen. Zusätzlich oder alternativ kann sich ein zweiter Axialabschnitt stromabwärts an einen ersten Axialabschnitt anschließen. Insbesondere kann also ein erster Axialabschnitt, in dem die radiale Erstreckung in Umfangsrichtung variiert und/oder der Strömungsquerschnitt divergiert, sich zwischen einem zweiten Axialabschnitt, der sich insbesondere vom Gittereintritt bis zum Gitteraustritt des Nachleitgitters erstrecken kann, und einem weiteren zweiten Axialabschnitt erstrecken, der sich seinerseits von dem maximalen Strömungsquerschnitt bis zu dem Kanalaustrittsströmungsquerschnitt erstrecken kann. Zusätzlich kann dem stromaufwärtigeren zweiten Axialabschnitt, der sich insbesondere vom Gittereintritt bis zum Gitteraustritt des Nachleitgitters erstrecken, ein weiterer erster Axialabschnitt vorgelagert sein, in dem die radiale Erstreckung in Umfangsrichtung variiert und/oder der Strömungsquerschnitt divergiert. In einer Ausführung erstreckt sich ein erster Axialabschnitt, in dem die radiale Erstreckung in Umfangsrichtung variiert und/oder der Strömungsquerschnitt divergiert, wenigstens im Wesentlichen, von dem Kanaleintrittsströmungsquerschnitt bis zu dem Gittereintritt. Zusätzlich oder alternativ erstreckt sich in einer Ausführung ein (weiterer) erster Axialabschnitt, in dem die radiale Erstreckung in Umfangsrichtung variiert und/oder der Strömungsquerschnitt divergiert, wenigstens im Wesentlichen, von dem Gitteraustritt bis zu dem maximalen Strömungsquerschnitt.

In einer Ausführung weist das Nachleitrad einen Mischraum auf, der sich insbesondere wenigstens im Wesentlichen unmittelbar, an den Kanalaustrittsströmungsquerschnitt anschließen kann und dazu vorgesehen bzw. eingerichtet ist, eine Strömung durch den Kern-Strömungskanal und eine Strömung durch den Bypass-Strömungskanal zu vermischen. Der Mischraum weist eine radial innere Innenwand auf, die mit einer radial inneren Innenwand eines Axialabschnitts, der sich von dem Kanalaustrittsströmungsquerschnitt stromaufwärts erstreckt, in einem oder mehreren Axial- bzw. Meridianschnitten, d.h. Schnitten, die die Maschinenachse enthalten, einen Winkel einschließt, der wenigstens 17°, insbesondere wenigstens 19°, und/oder höchstens 23°, insbesondere höchstens 21°, beträgt. Vorzugsweise beträgt der Winkel, wenigstens im Wesentlichen, 20°. Hierdurch kann in einer Ausführung die Beschickung des Mischraums optimiert werden.

In einer Ausführung schließt die radial innere Innenwand eines Axialabschnitts des Kernströmungskanals, der sich von dem Kanalaustrittsströmungsquerschnitt stromaufwärts erstreckt, in zwei in Umfangsrichtung voneinander beabstandeten Axialschnitten einen Winkel ein, der wenigstens 17°, insbesondere wenigstens 19°, und/oder höchstens 23°, insbesondere höchstens 21°, beträgt.

Zusätzlich oder alternativ kann in einer Ausführung eine radial äußere Außenwand eines Axialabschnitts des Kernströmungskanals, der sich von dem Kanalaustrittsströmungsquerschnitt stromaufwärts erstreckt, in zwei in Umfangsrichtung voneinander beabstandeten Axialschnitten einen Winkel einschließen, der wenigstens 17°, insbesondere wenigstens 19°, und/oder höchstens 23°, insbesondere höchstens 21°, beträgt.

In einer Weiterbildung weist eine radial äußere Mantelfläche des Nachleitrads in diesem Axialabschnitt eine in Umfangsrichtung, wenigstens im Wesentlichen, konstante radiale Erstreckung auf.

Die beiden Axialschnitte können in einer Ausführung in Umfangsrichtung insbesondere um eine halbe Schaufelteilung des Nachleitgitters voneinander beabstandet sein. Ein Winkel im Sinne der vorliegenden Erfindung, den eine Wand in zwei in Umfangsrichtung, insbesondere um eine halbe Schaufelteilung des Nachleitgitters, voneinander beabstandeten Axialschnitten einschließt, kann insbesondere derjenige Winkel sein, den eine Tangente an die Wand in dem einen Axialschnitt mit einer Tangente an die Wand in dem anderen Axialschnitt einschließt, wenn beide Axialschnitte bzw. Tangenten in Umfangsrichtung (virtuell) in dieselbe Axialschnittebene gedreht werden bzw. übereinandergelegt sind, insbesondere der eine Axialschnitt bzw. die eine Tangente um eine halbe Schaufelteilung des Nachleitgitters (virtuell) in den anderen Axialschnitt bzw. auf die andere Tangente gedreht wird bzw. ist. Gleichermaßen kann ein Winkel im Sinne der vorliegenden Erfindung, den eine Wand in zwei in Umfangsrichtung, insbesondere um eine halbe Schaufelteilung des Nachleitgitters, voneinander beabstandeten Axialschnitten einschließt, derjenige Winkel sein, den eine Tangente an die Wand in dem einen Axialschnitt mit einer Projektion einer Tangente an die Wand in dem anderen Axialschnitt in den einen Axialschnitt einschließt. Eine radial innere Innenwand und/oder eine radial äußere Außenwand eines oder mehrerer erster und/oder zweiter Axialabschnitte, insbesondere des Kern-Strömungskanals, können in einer Ausführung durch Umformen eines einteiligen Bleches hergestellt sein. Gleichermaßen können sie auch durch, insbesondere stoffschlüssiges, Verbinden, vorzugsweise Verschweißen, mehrerer Blechteile hergestellt sein. Solche stoffschlüssig miteinander verbundene Blechteile können in einer Ausführung, wenigstens im Wesentlichen, eben sein, so dass bei ihrer Verbindung Knicke in der Innen- bzw. Außenwand ausgebildet werden. Unabhängig von der Herstellung kann es vorteilhaft sein, wenn eine radial innere Innenwand und/oder eine radial äußere Außenwand eines oder mehrerer erster und/oder zweiter Axialabschnitte in Umfangsrichtung einen oder mehrere Knicke aufweist.

Weitere Merkmale und Vorteile ergeben sich aus den Unteransprüchen und den Ausführungsbeispielen. Hierzu zeigt, teilweise schematisiert:
- Fig. 1:: zwei in Umfangsrichtung um eine halbe Schaufelteilung gegeneinander versetzte Axialschnitte eines Nachleitrads eines Gasturbinen-Triebwerks nach einer Ausführung der vorliegenden Erfindung;
- Fig. 2:: einen Teil eines Querschnitts senkrecht zur Maschinenachse des Nachleitrads der Fig. 1;
- Fig. 3:: eine Abwandlung des Nachleitrads der Fig. 1 in Fig. 2 entsprechender Darstellung;
- Fig. 4:: einen Axialschnitt eines Nachleitrads eines Gasturbinen-Triebwerks nach einer weiteren Ausführung der vorliegenden Erfindung;
- Fig. 5:: einen Teil eines Querschnitts senkrecht zur Maschinenachse des Nachleitrads der Fig. 4;
- Fig. 6:: eine Abwandlung des Nachleitrads der Fig. 4 in Fig. 5 entsprechender Darstellung;
- Fig. 7:: eine weitere Abwandlung des Nachleitrads der Fig. 4 in Fig. 5 entsprechender Darstellung;
- Fig. 8:: eine weitere Abwandlung des Nachleitrads der Fig. 4 in Fig. 5 entsprechender Darstellung;
- Fig. 9:: ein Detail einer Abwandlung des Nachleitrads der Fig. 1 oder 4; und
- Fig. 10:: ein Detail einer weiteren Abwandlung des Nachleitrads der Fig. 1 oder 4 in Fig. 9 entsprechender Darstellung.

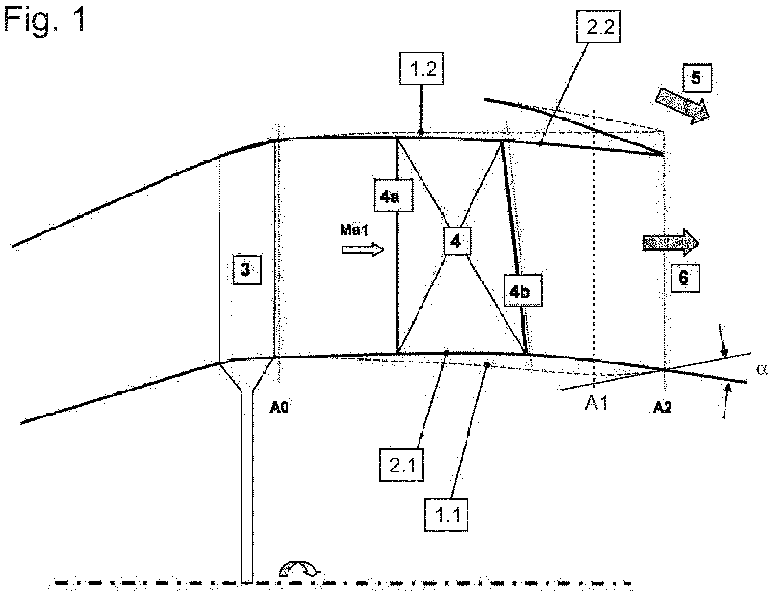

Fig. 1 zeigt einen Axialschnitt (ausgezogen in Fig. 1) eines Nachleitrads eines Gasturbinen-Triebwerks nach einer Ausführung der vorliegenden Erfindung in der Umfangsposition einer Leitschaufel eines Nachleitgitters 4 sowie zur Verdeutlichung in derselben Figur einen weiteren Axialschnitt (strichliert in Fig. 1) des Nachleitrads in einer demgegenüber um eine halbe Schaufelteilung verdrehten Umfangsposition, d.h. mittig zwischen zwei Leitschaufel.

Das Nachleitrad weist einen Kern-Strömungskanal zur Führung eines Kern-Massenstroms 6 auf. Der Kern-Strömungskanal wird durch eine radial innere Innenwand, die zur besseren Unterscheidung im Axialschnitt in der Umfangsposition der Leitschaufel des Nachleitgitters 4 (ausgezogen in Fig. 1) mit 2.1 und in der demgegenüber um eine halbe Schaufelteilung verdrehten Umfangsposition zwischen zwei Leitschaufeln (strichliert in Fig. 1) mit 1.1 bezeichnet ist, und eine radial äußere Außenwand definiert, die zur besseren Unterscheidung im Axialschnitt in der Umfangsposition der Leitschaufel des Nachleitgitters 4 mit 2.2 und in der demgegenüber um eine halbe Schaufelteilung verdrehten Umfangsposition zwischen zwei Leitschaufeln mit 1.2 bezeichnet ist.

Der Kern-Strömungskanal erstreckt sich von einem Kanaleintrittsströmungsquerschnitt A0, der sich an ein in Durchströmungsrichtung (von links nach rechts in Fig. 1) letztes Turbinenlaufgitter 3 anschließt, bis zu einem Kanalaustrittsströmungsquerschnitt A2. Vorder- bzw. Hinterkanten der Leitschaufeln definieren einen Gittereintritt 4a und einem Gitteraustritt 4b des Nachleitgitters 4.

Ein Bypass-Strömungskanal zur Führung eines Bypass-Massenstroms 5 umgibt den Kern-Strömungskanal und vereinigt sich mit diesem an dessen Kanalaustrittsströmungsquerschnitt A2.

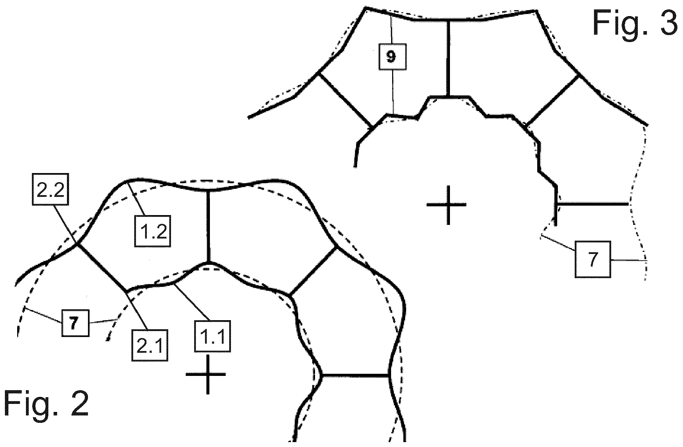

Fig. 2 zeigt (in ausgezogenen Linien) einen Schnitt senkrecht zur Maschinenachse dieses Nachleitrads auf Höhe des Nachleitgitters 4 bzw. zwischen Gittereintritt 4a und Gitteraustritt 4b. Zur Verdeutlichung ist in Fig. 2 zusätzlich strichliert eine radial innere Innenwand und eine radial äußere Außenwand mit konstanter radialer Höhe eingezeichnet, die einen Vergleichs-Kern-Strömungskanal 7 mit in Umfangsrichtung konstanter radialer Erstreckung definieren.

Wie insbesondere in Zusammenschau mit diesem gestrichelt angedeuteten Vergleichs-Kern-Strömungskanal 7 deutlich wird, variiert die radiale Erstreckung des gesamten Kern-Strömungskanals zwischen Kanaleintrittsströmungsquerschnitt A0 und Kanalaustrittsströmungsquerschnitt A2 in Umfangsrichtung periodisch: die radiale Höhe der radial inneren Innenwand variiert zwischen 1.1 und 2.1, die radiale Höhe der radial äußeren Außenwand variiert zwischen 1.2 und 2.2 derart, dass die radiale Erstreckung 2.1-2.2 des Kern-Strömungskanals an den Leitschaufeln des Nachleitgitters 4 minimal ist und die radiale Erstreckung 1.1-1.2 in der Mitte zwischen benachbarten Schaufeln des Nachleitgitters 4 maximal ist.

Ein erster Axialabschnitt im Sinne der vorliegenden Erfindung, in dem eine radiale Erstreckung des Kern-Strömungskanals in Umfangsrichtung periodisch variiert, erstreckt sich in dieser Ausführung somit insbesondere von dem Kanaleintrittsströmungsquerschnitt A0 bis zu einem maximalen Strömungsquerschnitt A1.

Hierdurch wird eine Vermischung des Kern-Massenstroms 6 mit dem Bypass-Massenstrom 5 verbessert.

In diesem ersten Axialabschnitt divergiert zusätzlich der Strömungsquerschnitt in Durchströmungsrichtung (von links nach rechts in Fig. 1): man erkennt, dass die radiale Erstreckung des Kern-Strömungskanals in der Umfangsposition der Leitschaufeln des Nachleitgitters 4 im Wesentlichen konstant bleibt (ausgezogen in Fig. 1), während sie sich dazwischen, insbesondere in der um eine halbe Schaufelteilung verdrehten Umfangsposition mittig zwischen zwei Leitschaufeln bis zum maximalen Strömungsquerschnitt A1 vergrößert (strichliert in Fig. 1), so dass der Strömungsquerschnitt insgesamt divergiert. Hierdurch kann insbesondere die Anströmung Ma1 des Nachleitgitters 4 verbessert werden.

Von dem maximalen Strömungsquerschnitt A1 bis zu dem Kanalaustrittsströmungsquerschnitt A2 konvergiert der Kern-Strömungskanal, obwohl auch in diesem Axialabschnitt seine radiale Erstreckung in Umfangsrichtung in gleicher Weise variiert wie in dem oben genannten ersten Axialabschnitt A0-A1. Insofern stellt der Axialabschnitt A1-A2 einen ersten Axialabschnitt im Sinne der vorliegenden Erfindung dar, in dem eine radiale Erstreckung des Kern-Strömungskanals in Umfangsrichtung periodisch variiert, und zugleich einen zweiten Axialabschnitt im Sinne der vorliegenden Erfindung mit in Durchströmungsrichtung konvergierenden Strömungsquerschnitt.

Die Innen- und Außenwand des Kern-Strömungskanals sind durch Umformen eines einteiligen Bleches hergestellt. In einer in Fig. 3 dargestellten Abwandlung sind sie durch Verschweißen mehrerer ebener Blechteile 9 hergestellt, so dass die Innen- und Außenwand an den Nahtkanten der Blechteile 9 Knicke aufweisen.

Ein an den Kanalaustrittsströmungsquerschnitt A2 anschließender Mischraum zur Vermischung von Kern-Massenstrom 6 und Bypass-Massenstrom 5 weist eine radial innere Innenwand auf, die mit der radial inneren Innenwand des Axialabschnitts A1-A2, der sich von dem Kanalaustrittsströmungsquerschnitt A2 stromaufwärts (nach links in Fig. 1) erstreckt, in den Axialschnitten in Umfangsposition der Leitschaufeln des Nachleitgitters 4 (ausgezogen in Fig. 1) einen Winkel α einschließt, der etwa 20° beträgt, was vorteilhaft insbesondere eine Wirbelbildung und eine Energetisierung der Grenzschicht hin zu einer größeren Verzögerungsfähigkeit bewirken kann.

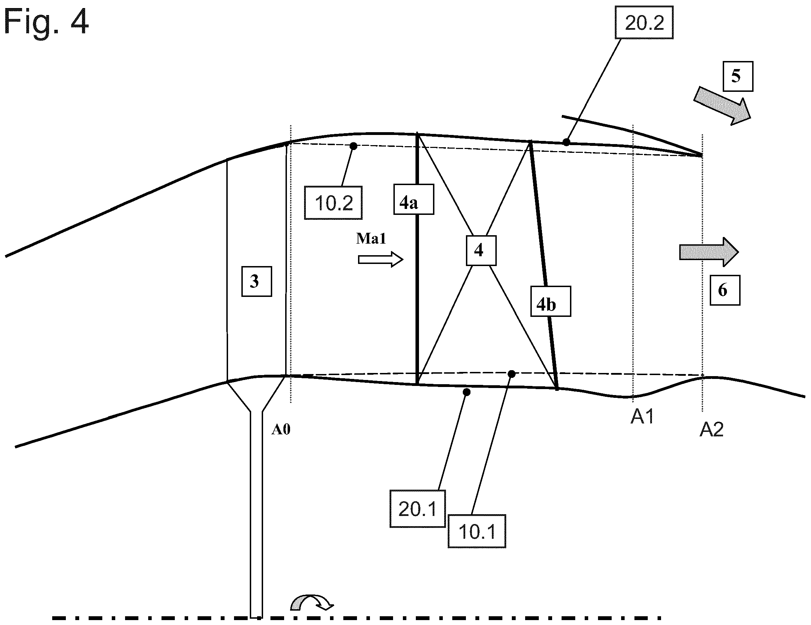

Fig. 4 zeigt einen Axialschnitt (ausgezogen in Fig. 4) eines Nachleitrads eines Gasturbinen-Triebwerks nach einer weiteren Ausführung der vorliegenden Erfindung in der Umfangsposition einer Leitschaufel eines Nachleitgitters sowie zur Verdeutlichung in derselben Figur einen Axialschnitt (strichliert in Fig. 4) eines im Übrigen baugleichen Nachleitrads mit einem Vergleichs-Kern-Strömungskanal 7 mit in Durchströmungsrichtung im Wesentlichen konstanten Strömungsquerschnitt.

Mit der Ausführung der Fig. 1 bis 3 übereinstimmende Merkmale sind durch identische Bezugszeichen bezeichnet, so dass nachfolgend nur auf die Unterschiede zu der vorstehend mit Bezug auf Fig. 1 bis 3 beschriebenen Ausführung eingegangen und im Übrigen auf deren Beschreibung Bezug genommen wird.

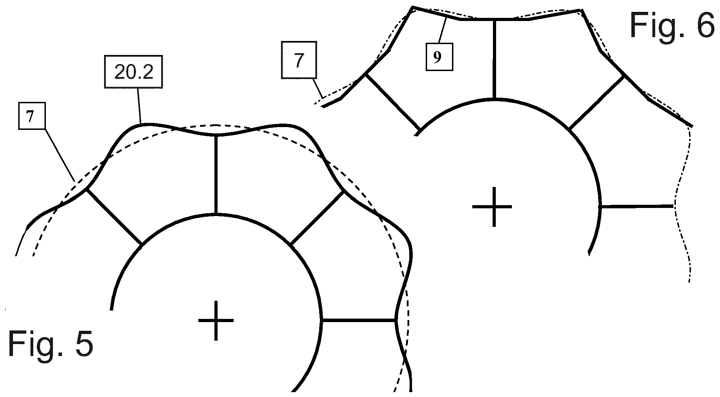

In Fig. 4 ist mit 10.1, 10.2 eine radial innere Innenwand bzw. radial äußere Außenwand des Vergleichs-Kern-Strömungskanals 7 (vgl. Fig. 5) bezeichnet, die sowohl in Umfangsrichtung (vgl. Fig. 5) als auch in Durchströmungsrichtung (von links nach rechts in Fig. 4) im Wesentlichen eine konstante radiale Höhe bzw. einen konstanten radialen Abstand zur Maschinenachse (strichpunktiert in Fig. 1, 4) aufweist.

Mit 20.1, 20.2 ist demgegenüber eine radial innere Innenwand bzw. radial äußere Außenwand des Kern-Strömungskanals des Nachleitrades gemäß der weiteren Ausführung der Erfindung bezeichnet. Man erkennt, dass die radiale Höhe der Außenwand 20.2 zwischen dem Kanaleintrittsströmungsquerschnitt A0 und dem Gittereintritt 4a in Durchströmungsrichtung anwächst, zwischen Gitterein- und -austritt 4a, 4b im Wesentlichen konstant ist oder leicht abnimmt, und sich zwischen dem Gitteraustritt 4b und dem Kanalaustrittsströmungsquerschnitt A2 wieder verringert.

Die radiale Höhe der Innenwand 20.1 nimmt in dem Axialabschnitt zwischen dem Kanaleintrittsströmungsquerschnitt A0 und dem Gittereintritt 4a ab, so dass der Strömungsquerschnitt in diesem Axialabschnitt A0-4a in Durchströmungsrichtung divergiert. Der Axialabschnitt A0-4a bildet somit einen ersten Axialabschnitt im Sinne der vorliegenden Erfindung. In dem Axialabschnitt zwischen Gitterein- und-austritt 4a-4b ist die radiale Höhe der Innenwand 20.1 im Wesentlichen konstant oder nimmt leicht ab, so dass der Strömungsquerschnitt in diesem Axialabschnitt 4a-4b in Durchströmungsrichtung im Wesentlichen konstant ist oder konvergiert. Der Axialabschnitt 4a-4b bildet somit einen zweiten Axialabschnitt im Sinne der vorliegenden Erfindung. In dem Axialabschnitt zwischen Gitteraustritt 4b und dem maximalen Strömungsquerschnitt A1 verringert sich die radiale Höhe der Innenwand 20.1 stärker als diejenige der Außenwand 20.2, so dass der Strömungsquerschnitt in diesem Axialabschnitt 4b-A1 in Durchströmungsrichtung divergiert und der Axialabschnitt 4b-A1 somit einen weiteren ersten Axialabschnitt im Sinne der vorliegenden Erfindung bildet. Zwischen dem maximalen Strömungsquerschnitt A1 und dem Kanalaustrittsströmungsquerschnitt A2 vergrößert sich die radiale Höhe der Innenwand 20.1, so dass der Strömungsquerschnitt in diesem Axialabschnitt A1-A2 in Durchströmungsrichtung konvergiert und der Axialabschnitt A1-A2 somit einen weiteren zweiten Axialabschnitt im Sinne der vorliegenden Erfindung bildet.

Durch den in Fig. 4 linken ersten Axialabschnitt A0-4a mit divergierendem Strömungsquerschnitt wird die Anströmung des Nachleitgitters 4 verbessert, durch den sich stromabwärts anschließenden zweiten Axialabschnitt 4a-4b die Durchströmung des Nachleitgitters 4. Durch den anschließenden weiteren ersten Axialabschnitt 4b-A1 und den sich daran anschließenden weiteren zweiten Axialabschnitt A1-A2 wird ebenfalls die Durchströmung des Kern-Strömungskanals und die Beschickung des sich anschließenden Mischraums verbessert.

Fig. 5 zeigt in Fig. 2 entsprechender Weise (in ausgezogenen Linien) einen Schnitt senkrecht zur Maschinenachse dieses Nachleitrads auf Höhe einer Leitschaufel des Nachleitgitters 4 bzw. zwischen Gittereintritt 4a und Gitteraustritt 4b. Zur Verdeutlichung ist in Fig. 5 ebenfalls strichliert eine äußere Außenwand mit konstanter radialer Höhe eingezeichnet, die den Vergleichs-Kern-Strömungskanal 7 mit in Umfangsrichtung konstanter radialer Erstreckung definiert. Man erkennt, dass auch bei dieser Ausführung die radiale Erstreckung des Kern-Strömungskanals in Umfangsrichtung, wenigstens in dem in Fig. 4 linken zweiten Axialabschnitt 4a-4b, in Umfangsrichtung periodisch variiert, wobei hier die Variation nur durch eine Variation der radialen Höhe der Außenwand 20.2 dargestellt wird. Um, wie vorstehend erläutert, in den zweiten Abschnitten gleichwohl einen im Wesentlichen konstanten oder konvergierenden Strömungsquerschnitt darzustellen, kann auch dort die radiale Erstreckung, insbesondere in gleicher Weise, in Umfangsrichtung variieren, so dass sie zugleich erste Axialabschnitte mit in Umfangsrichtung variierender radialer Erstreckung im Sinne der vorliegenden Erfindung sind. In einer Abwandlung kann in diesen Abschnitten stattdessen auch die radiale Erstreckung in Umfangsrichtung konstant sein.

Die Innen- und Außenwand des Kern-Strömungskanals sind durch Umformen eines einteiligen Bleches hergestellt. In einer in Fig. 6 dargestellten Abwandlung ist die Außenwand durch Verschweißen mehrerer ebener Blechteile 9 hergestellt, so dass sie an den Nahtkanten der Blechteile 9 Knicke aufweist.

Das Verhältnis A1/A0 des maximalen Strömungsquerschnitts A1 zu dem Kanaleintrittsströmungsquerschnitt A0 beträgt in den vorstehend erläuterten Ausführungen etwa 1,05: A1/A0 ≈ 1,05. Wie in Fig. 1, 4 erkennbar, ist der maximale Strömungsquerschnitt zwischen Gitteraustritt 4b und Kanalaustrittsströmungsquerschnitt A2 angeordnet.

Der zweite Axialabschnitt 4a-4b mit in Durchströmungsrichtung wenigstens im Wesentlichen konstantem oder konvergierenden Strömungsquerschnitt erstreckt sich zwischen bzw. von Gittereintritt und bzw. zum Gitteraustritt 4a-4b des Nachleitgitters 4 und schließt sich stromabwärts des ersten Axialabschnitts A0-4a und zugleich stromaufwärts des weiteren ersten Axialabschnitts 4b-A1 an. Der weitere zweite Axialabschnitt A1-A2 erstreckt sich zwischen bzw. von dem maximalen Strömungsquerschnitt A1 und bzw. zu dem Kanalaustrittsströmungsquerschnitt A2 und schließt sich stromabwärts des weiteren ersten Axialabschnitts 4b-A1 an.

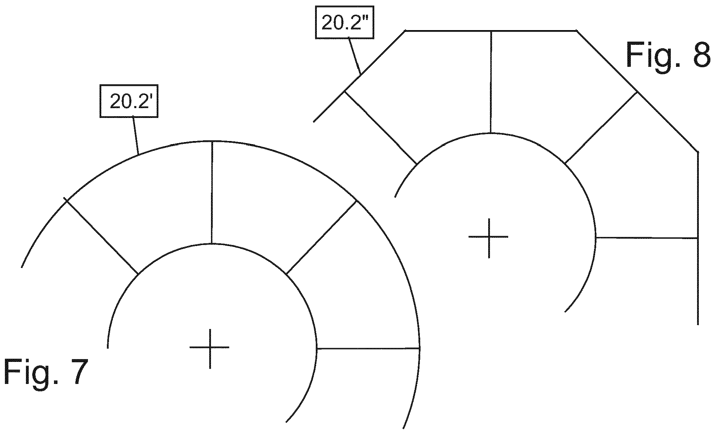

Fig. 7, 8 zeigen in Fig. 5 entsprechender Darstellung zwei weitere Abwandlungen des Nachleitrads der Fig. 4. Der Ausführung der Fig. 4 bis 6 entsprechende Merkmale sind durch identische oder durch Apostrophe (', ") differenzierte Bezugszeichen bezeichnet, so dass nachfolgend nur auf die Unterschiede zu der vorstehend mit Bezug auf Fig. 4 bis 6 beschriebenen Ausführung eingegangen und im Übrigen auf deren Beschreibung Bezug genommen wird.

Bei der Ausführung der Fig. 7 ist die radiale Erstreckung des Kern-Strömungskanals über der gesamten axialen Länge und somit insbesondere auch in dem in Fig. 4 linken zweiten Axialabschnitt 4a-4b in Umfangsrichtung konstant, wobei hier nicht nur, wie in der Ausführung der Fig. 4, die radiale Höhe der Innenwand, sondern auch die radiale Höhe der Außenwand 20.2' in Umfangsrichtung konstant ist. Somit ist der durch die radial innere Innenwand und radial äußere Außenwand definierte Ringraum bzw. Kern-Strömungskanal in der Ausführung der Fig. 7 überall rotationssymmetrisch und weist erste Axialabschnitte auf, deren Strömungsquerschnitte in Durchströmungsrichtung divergieren.

Bei der Ausführung der Fig. 8 ist die rotationssymmetrische Außenwand 20.2" durch ebene Flächen angenähert.

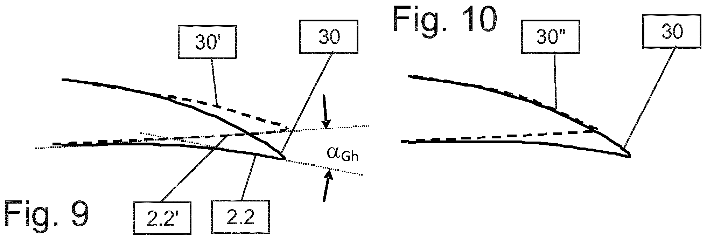

Fig. 9 zeigt ein Detail einer Abwandlung des Nachleitrads der Fig. 1 oder 4 in Fig. 1 bzw. 4 entsprechender Darstellung. Der Ausführung der Fig. 1 bzw. 4 entsprechende Merkmale sind durch identische oder durch Apostrophe (', ") differenzierte Bezugszeichen bezeichnet, so dass nachfolgend nur auf die Unterschiede zu der vorstehend mit Bezug auf Fig. 1 bis 8 beschriebenen Ausführung eingegangen und im Übrigen auf deren Beschreibung Bezug genommen wird.

In der Ausführung der Fig. 9 schließt eine radial äußere Außenwand 2.2(') eines Axialabschnitts des Kernströmungskanals, der sich von dem Kanalaustrittsströmungsquerschnitt stromaufwärts (nach links in Fig. 1, 9) erstreckt, in zwei in Umfangsrichtung voneinander um eine halbe Schaufelteilung des Nachleitgitters beabstandeten Axialschnitten einen Winkel α_{Gh} ein, der etwa 20° beträgt.

Zur Verdeutlichung sind zwei in Umfangsrichtung voneinander um eine halbe Schaufelteilung des Nachleitgitters beabstandeten Axialschnitte in Fig. 9 in Umfangsrichtung in dieselbe Axialschnittebene gedreht bzw. übereinandergelegt, insbesondere der eine Axialschnitt um eine halbe Schaufelteilung des Nachleitgitters in den anderen Axialschnitt gedreht. Dabei ist ein Axialschnitt ausgezogen dargestellt und die Außenwand in diesem Axialschnitt entsprechend Fig. 1 mit 2.2 bezeichnet, die insoweit der Außenwand 20.2 der Fig. 4 entspricht. Der andere Axialschnitt ist strichliert dargestellt und die Außenwand in diesem in Umfangsrichtung um eine halbe Schaufelteilung des Nachleitgitters beabstandeten Axialschnitt mit 2.2' bezeichnet. Man erkennt in dieser übereinandergelegten Darstellung, dass die Außenwand bzw. eine Tangente an diese Außenwand in diesen beiden Axialschnitten den Winkel α_{Gh} im Sinne der vorliegenden Erfindung einschließt, der etwa 20° beträgt. In Durchströmungsrichtung ergibt sich somit eine Art Blütenkontur.

In der Ausführung der Fig. 9 variiert eine radial äußere Mantelfläche 30(') des Nachleitrads in diesem Axialabschnitt in Umfangsrichtung, wie in der übereinandergelegten bzw. -drehten Darstellung der beiden Axialschnitte erkennbar, in denen diese Mantelfläche analog zu der Innenwand 2.2(') mit 30 bzw. 30' bezeichnet ist.

In einer im Übrigen mit dieser Ausführung der Fig. 9 übereinstimmenden Abwandlung, die in in Fig. 9 entsprechender Weise in Fig. 10 dargestellt ist, weist die radial äußere Mantelfläche 30(") des Nachleitrads hingegen in diesem Axialabschnitt eine in Umfangsrichtung, wenigstens im Wesentlichen, konstante radiale Erstreckung auf. Zur Verdeutlichung sind wie in Fig. 9 die beiden in Umfangsrichtung voneinander um eine halbe Schaufelteilung des Nachleitgitters beabstandeten Axialschnitte übereinandergelegt bzw. -dreht und ausgezogen bzw. strichliert dargestellt, wobei die äußere Mantelfläche in dem ausgezogen dargestellten Axialschnitt mit 30 bezeichnet ist, in dem strichliert dargestellten Axialschnitt hingegen mit 30".

Auf diese Weise bleibt trotz der wie in Fig. 9 in Umfangsrichtung variierenden radial äußeren Außenfläche 2.2('), die in in Umfangsrichtung voneinander um eine halbe Schaufelteilung des Nachleitgitters beabstandeten Axialschnitten den Winkel α_{Gh} einschließt, die Außenkontur des Nachleitrandes in diesen Axialabschnitt, der sich von dem Kanalaustrittsströmungsquerschnitt stromaufwärts erstreckt, erhalten.

### Bezugszeichenliste

- 1.1, 2.1; 10.1, 20.1: radial innere Innenwand
- 1.2, 2.2; 10.2, 20.2: radial äußere Außenwand
- 3: (letztes) Turbinenlaufgitter
- 4: Nachleitgitter(leitrad)
- 4a: Gittereintritt
- 4b: Gitteraustritt
- 5: Bypass-Massenstrom
- 6: Kern-Massenstrom
- 7: Vergleichs-Kern-Strömungskanal
- 9: (ebene) Blechteile

- A0: Kanaleintrittsströmungsquerschnitt
- A1: maximaler Strömungsquerschnitt
- A2: Kanalaustrittsströmungsquerschnitt
- Ma1: Anströmung

## Patentansprüche

1. Nachleitrad für ein Gasturbinen-Triebwerk, mit:
einem Kern-Strömungskanal mit einem Kanaleintrittsströmungsquerschnitt (A0), einem Kanalaustrittsströmungsquerschnitt (A2) und einem Nachleitgitter (4) zur Strömungsumlenkung in Umfangsrichtung zwischen einem Gittereintritt (4a) und einem Gitteraustritt (4b) des Nachleitgitters, das zwischen Kanalein- und -austrittsströmungsquerschnitt angeordnet ist, und
einem Bypass-Strömungskanal (5), der den Kern-Strömungskanal umgibt und sich mit diesem an dessen Kanalaustrittsströmungsquerschnitt vereinigt,
wobei in wenigstens einem ersten Axialabschnitt (A0-A1) zwischen Kanalein- und -austrittsströmungsquerschnitt eine radiale Erstreckung des Kern-Strömungskanals in Umfangsrichtung, insbesondere periodisch, variiert und/oder der Strömungsquerschnitt in Durchströmungsrichtung divergiert,
**dadurch gekennzeichnet, dass**
der maximale Strömungsquerschnitt - wenigstens im Wesentlichen - mittig zwischen Gitteraustritt und Kanalaustrittsströmungsquerschnitt angeordnet ist.

2. Nachleitrad nach Anspruch 1, **dadurch gekennzeichnet, dass** ein maximaler Strömungsquerschnitt (A1) zwischen Kanalein- und-austrittsströmungsquerschnitt wenigstens das 1,02flache, insbesondere wenigstens das 1,04flache, und/oder höchstens das 1,10fache, insbesondere höchstens das 1,08fache, insbesondere höchstens das 1,06fache des Kanaleintrittsströmungsquerschnitts (A0) beträgt.

3. Nachleitrad nach einem der vorhergehenden Ansprüche, **dadurch gekennzeichnet, dass** ein zweiter Axialabschnitt (4a-4b; A1-A2) mit in Durchströmungsrichtung wenigstens im Wesentlichen konstantem oder konvergierendem Strömungsquerschnitt sich, wenigstens im Wesentlichen, zwischen Gitterein- und - austritt des Nachleitgitters und/oder zwischen einem maximalen Strömungsquerschnitt und dem Kanalaustrittsströmungsquerschnitt erstreckt.

4. Nachleitrad nach dem vorhergehenden Anspruch, **dadurch gekennzeichnet, dass** der zweite Axialabschnitt stromauf- und/oder -abwärts an einen ersten Axialabschnitt anschließt.

5. Nachleitrad nach einem der vorhergehenden Ansprüche, **dadurch gekennzeichnet, dass** in einem ersten Axialabschnitt die radiale Erstreckung des Kern-Strömungskanals an wenigstens einer Schaufel des Nachleitgitters (4) minimal und/oder in der Mitte zwischen wenigstens zwei benachbarten Schaufeln des Nachleitgitters maximal ist.

6. Nachleitrad nach einem der vorhergehenden Ansprüche, **dadurch gekennzeichnet, dass** in einem ersten Axialabschnitt eine radiale Höhe einer radial inneren Innenwand (1.1,2.1; 20.1) und/oder einer radial äußeren Außenwand (1.2, 2.2; 20.2) in Umfangsrichtung variiert.

7. Nachleitrad nach einem der vorhergehenden Ansprüche, **gekennzeichnet durch** einen an den Kanalaustrittsströmungsquerschnitt anschließenden Mischraum mit einer radial inneren Innenwand, die mit einer radial inneren Innenwand eines Axialabschnitts, der sich von dem Kanalaustrittsströmungsquerschnitt stromaufwärts erstreckt, in wenigstens einem Axialschnitt einen Winkel (α) ein-schließt, der wenigstens 17°, insbesondere wenigstens 19°, und/oder höchstens 23°, insbesondere höchstens 21°, beträgt.

8. Nachleitrad nach einem der vorhergehenden Ansprüche, **dadurch gekennzeichnet, dass** eine radial innere Innenwand (2.1) und/oder eine radial äußere Außenwand (2.2) eines Axialabschnitts, der sich von dem Kanalaustrittsströmungsquerschnitt stromaufwärts erstreckt, in zwei in Umfangsrichtung voneinander beabstandeten Axialschnitten (2.2, 2.2') einen Winkel (α; α_{Gh}) einschließt, der wenigstens 17°, insbesondere wenigstens 19°, und/oder höchstens 23°, insbesondere höchstens 21°, beträgt.

9. Nachleitrad nach dem vorhergehenden Anspruch, **dadurch gekennzeichnet, dass** eine radial äußere Mantelfläche (30, 30") des Nachleitrads in diesem Axialabschnitt eine in Umfangsrichtung, wenigstens im Wesentlichen, konstante radiale Erstreckung aufweist.

10. Nachleitrad nach einem der vorhergehenden Ansprüche, **dadurch gekennzeichnet, dass** eine radial innere Innenwand und/oder eine radial äußere Außenwand eines ersten Axialabschnitts durch Umformen eines einteiligen Bleches oder, insbesondere stoffschlüssiges, Verbinden mehrerer Blechteile (9) hergestellt ist.

11. Nachleitrad nach einem der vorhergehenden Ansprüche, **dadurch gekennzeichnet, dass** eine radial innere Innenwand und/oder eine radial äußere Außenwand eines ersten Axialabschnitts in Umfangsrichtung wenigstens einen Knick aufweisen.

12. Gasturbinen-Triebwerk mit einem Nachleitrad nach einem der vorhergehenden Ansprüche, dessen Kanaleintrittsströmungsquerschnitt an ein in Durchströmungsrichtung letztes Turbinenlaufgitter (3) anschließt.

## Claims

1. A guide wheel for a gas turbine power plant comprising: a core flow channel having a channel intake flow cross-section (A0), a channel discharge flow cross-section (A2) and a discharge guide vane (4) for the flow deflection in a circumferential direction between a vane entry (4a) and a vane discharge (4b) of the discharge guide vane that is arranged between the channel intake and discharge cross-section, and a bypass flow channel (5) that surrounds the core flow channel and merges with it at its channel discharge flow cross section, wherein in at least one first axial section (AO-AI) between the channel intake and discharge flow cross-section a radial extension of the core flow channel in the circumferential direction varies, in particular periodically, and/or the flow cross-section diverges in the flow-through direction, **characterized in that** the maximum flow cross-section - at least essentially - is arranged centered between the vane discharge and channel discharge cross-section.

2. The guide wheel according to claim 1, **characterized in that** a maximum flow cross-section (A1) between the channel intake and discharge flow cross-section is a least 1.02 times, in particular at least 1.04 times, and/or at most 1,10 times, in particular at least a maximum of 1.08 times, in particular a maximum of 1.06 times the channel intake flow cross-section (A0).

3. The guide wheel according to any of the preceding claims, **characterized in that** a second axial section (4a-4b; A1-A2) extends with a flow cross-section that is essentially constant or convergent in the flow-through direction, at least in the essentially constant or convergent flow cross-section, at least essentially between vane intake and discharge of the discharge guide vane and/or between a maximum flow cross-section and the channel discharge flow cross-section.

4. The guide wheel according to the preceding claim, **characterized in that** the second axial section connects upstream and/or downstream to a first axial section.

5. The guide wheel according to any of the preceding claims, **characterized in that** in a first axial section the radial extension of the core flow channel is minimal for at least one blade of the discharge guide vane (4) and/or is maximal in the center between at least two adjacent blades of the discharge guide vane.

6. The guide wheel according to any of the preceding claims, **characterized in that** in a first axial section a radial height of a radially interior inner wall (1.1, 2.1; 20.1) and/or a radially exterior outer wall (1.2, 2.2; 20.2) varies in the circumferential direction.

7. The guide wheel according to any of the preceding claims, **characterized in that** a mixing chamber connecting to the channel discharge flow cross-section and having a radial interior inner wall that extends from the channel discharge flow cross-section in the upstream direction includes an angle (α) in at least one axial section that is at least 17°, in particular at least 19°, and/or at most 23°, in particular at most 21°.

8. The guide wheel according to any of the preceding claims, **characterized in that** a radially interior inner wall (2.1) and/or a radially exterior outer wall (2.2) of an axial section that extends from the channel discharge flow cross-section upstream includes an angle (α; α_{Gh}) in two axial sections (2.2, 2.2') spaced apart from each other that is at least 17°, in particular at least 19°, and/or at most 23°, in particular at most 21°.

9. The guide wheel according to the preceding claim, **characterized in that** a radially exterior cover surface (30, 30") of the guide wheel in this axial section has in the circumferential direction an at least essentially constant radial extension.

10. The guide wheel according to any of the preceding claims, **characterized in that** a radially interior inner wall and/or a radially exterior outer wall of a first axial section is produced by reshaping a one-piece sheet metal part or an in particular firmly bonded joining of a plurality of sheet metal parts (9).

11. The guide wheel according to any of the preceding claims, **characterized in that** a radially interior inner wall and/or a radially exterior outer wall of a first axial section have at least one kink in the circumferential direction.

12. A gas turbine power plant having a guide wheel according to any of the preceding claims, the channel intake flow cross-section of which connects to a last turbine flow vane (3) in the flow-through direction.

## Revendications

1. Roue de redresseur d'air arrière pour un groupe motopropulseur à turbine à gaz, comprenant :
un canal d'écoulement central avec une section transversale d'écoulement d'entrée de canal (A0), une section transversale d'écoulement de sortie de canal (A2) et une grille de redresseur d'air arrière (4) pour dévier l'écoulement dans la direction circonférentielle entre une entrée de grille (4a) et une sortie de grille (4b) de la grille de redresseur d'air arrière, qui est agencée entre la section transversale d'écoulement d'entrée et la section transversale d'écoulement de sortie du canal, et
un canal d'écoulement de dérivation (5), qui entoure le canal d'écoulement central et s'unit à celui-ci dans sa section transversale d'écoulement de sortie,
dans lequel, dans au moins une première section axiale (A0-A1) entre la section transversale d'écoulement d'entrée et la section transversale d'écoulement de sortie du canal, une extension radiale du canal d'écoulement central varie dans la direction circonférentielle, en particulier de manière périodique, et/ou la section transversale d'écoulement diverge dans la direction de circulation,
**caractérisée en ce que :**
la section d'écoulement maximale est agencée - au moins sensiblement - au centre entre la sortie de la grille et la section transversale d'écoulement de sortie du canal.

2. Roue de redresseur d'air arrière selon la revendication 1, **caractérisée en ce qu'**une section transversale d'écoulement maximale (A1) entre la section transversale d'écoulement d'entrée et la section transversale d'écoulement de sortie du canal atteint au moins 1,02 fois, en particulier au moins 1,04 fois et/ou au maximum 1,10 fois, en particulier au maximum 1,08 fois, tout particulièrement au maximum 1,06 fois la section transversale d'écoulement d'entrée (A0) du canal.

3. Roue de redresseur d'air arrière selon l'une quelconque des revendications précédentes, **caractérisée en ce qu'**une seconde section axiale (4a-4b ; A1-A2) ayant une section transversale d'écoulement au moins sensiblement constante ou convergente dans la direction de circulation s'étend au moins sensiblement entre l'entrée et la sortie de la grille de redresseur d'air arrière et/ou entre une section transversale d'écoulement maximale et la section transversale d'écoulement de sortie du canal.

4. Roue de redresseur d'air arrière selon la revendication précédente, **caractérisée en ce que** la seconde section axiale se raccorde en amont et/ou en aval à une première section axiale.

5. Roue de redresseur d'air arrière selon l'une quelconque des revendications précédentes, **caractérisée en ce que,** dans une première section axiale, l'extension radiale du canal d'écoulement central est minimale sur au moins une pale de la grille de redresseur d'air arrière (4) et/ou est maximale au centre entre au moins deux pales adjacentes de la grille de redresseur d'air arrière.

6. Roue de redresseur d'air arrière selon l'une quelconque des revendications précédentes, **caractérisée en ce que,** dans une première section axiale, une hauteur radiale d'une paroi radialement interne (1.1, 2,1 ; 20.1) et/ou d'une paroi radialement externe (1.2, 2.2 ; 20.2) varie dans la direction circonférentielle.

7. Roue de redresseur d'air arrière selon l'une quelconque des revendications précédentes, **caractérisée par** une chambre de mélange se raccordant à la section transversale d'écoulement de sortie du canal avec une paroi radialement interne qui inclut avec une paroi radialement interne d'une section axiale qui s'étend en amont de la section transversale d'écoulement de sortie du canal, dans au moins une section axiale un angle (α), qui atteint au moins 17°, en particulier au moins 19° et/ou maximum 23°, en particulier au maximum 21°.

8. Roue de redresseur d'air arrière selon l'une quelconque des revendications précédentes, **caractérisée en ce qu'**une paroi radialement interne (2.1) et/ou une paroi radialement externe (2.2) d'une section axiale, qui s'étend en amont de la section transversale d'écoulement de sortie du canal, inclut dans deux sections axiales (2.2, 2.2') espacées l'une de l'autre dans la direction circonférentielle un angle (α ; α_{Gh}), qui atteint au moins 17°, en particulier au moins 19° et/ou au maximum 23°, en particulier au maximum 21°.

9. Roue de redresseur d'air arrière selon la revendication précédente, **caractérisée en ce qu'**une surface de chemisage radialement externe (30, 30") de la roue de redresseur d'air arrière présente dans cette section axiale une extension radiale au moins sensiblement constante dans la direction circonférentielle.

10. Roue de redresseur d'air arrière selon l'une quelconque des revendications précédentes, **caractérisée en ce qu'**une paroi radialement interne et/ou une paroi radialement externe d'une première section axiale est ou sont fabriquées par déformation d'une tôle d'un seul tenant ou par liaison de plusieurs parties de tôle (9) en particulier par adhérence.

11. Roue de redresseur d'air arrière selon l'une quelconque des revendications précédentes, **caractérisée en ce qu'**une paroi radialement interne et/ou une paroi radialement externe d'une première section axiale présente(nt) au moins un coude dans la direction circonférentielle,

12. Groupe motopropulseur à turbine à gaz comprenant une roue de redresseur d'air arrière selon l'une quelconque des revendications précédentes, dont la section transversale d'écoulement d'entrée du canal se raccorde à une grille d'écoulement de turbine (3) qui est la dernière dans la direction de circulation.
